Europäisches Patentamt

European Patent Office

Office européen des brevets

(19)

(11) Numéro de publication: **0 243 851**
**B1**

(12) **FASCICULE DE BREVET EUROPEEN**

(45) Date de publication du fascicule du brevet: **27.12.90**

(51) Int. Cl.⁵: **B 29 D 30/34**

(21) Numéro de dépôt: **87105841.8**

(22) Date de dépôt: **21.04.87**

(54) **Procédé et appareil de fabrication de renforcements pour pneumatiques.**

(30) Priorité: **25.04.86 FR 8606159**

(43) Date de publication de la demande:
**04.11.87 Bulletin 87/45**

(45) Mention de la délivrance du brevet:
**27.12.90 Bulletin 90/52**

(84) Etats contractants désignés:
**AT BE CH DE ES FR GB GR IT LI LU NL SE**

(56) Documents cités:
**EP-A-0 009 018**
**WO-A-83/02749**
**DE-B-1 291 112**
**US-A-1 328 006**

(73) Titulaire: **MICHELIN & CIE (Compagnie Générale des Etablissements Michelin) Société dite:**
**4 rue du Terrail**
**F-63000 Clermont-Ferrand (FR)**

(72) Inventeur: **Laurent, Daniel**
**23, avenue de la Plaine Fleurie**
**F-38240 Meylan (FR)**
Inventeur: **Mayet, Jean-Claude**
**48, rue Clovis Hugues Pavillon no 10**
**F-63100 Clermont-Ferrand (FR)**

(74) Mandataire: **Renaudie, Jacques et al**
**Michelin & Cie Service K. Brevets**
**F-63040 Clermont-Ferrand Cédex (FR)**

Courier Press, Leamington Spa, England.

## Description

La présente invention se rapporte à la fabrication des pneumatiques. Plus particulèrement, elle concerne un procédé et un appareil de fabrication de renforcements pour pneumatiques.

Les pneumatiques sont renforcés notamment par au moins une nappe dite de carcasse, à l'heure actuelle le plus souvent disposée radialement, ancrée dans chacun des deux bourrelets à au moins une tringle. Les nappes comportent une pluralité de fils adjacents qui, dans le cas des carcasses radiales, sont approximativement inclus dans un plan passant par l'axe de rotation du pneumatique.

Le terme "fil" doit être compris dans le sens le plus général, à savoir aussi bien un fil unitaire qu'un câble formé par l'assemblage de plusieurs fils unitaires, ou un assemblage équivalent.

Dans la technique antérieure, le procédé le plus usuel consiste à preparer, à partir d'un grand nombre de bobines de fils déroulées simultanément, des nappes dont les fils sont orientés parallèlement à leur plus grande longueur et sont enrobés dans du caoutchouc. Ces nappes sont ensuite coupées selon une angle voulu, par exemple un angle droit, en morceaux de longueur appropriée, puis ces morceaux de nappes sont aboutés par leurs tranches parallèles aux fils, avec ou sans superposition de fils, pour former des produits intermédiaires ou semi-finis utilisés lors de la fabrication du pneumatique proprement dite. La fabrication de tels produits semi-finis est illustrée par exemple par le brevet US 3 573 135. Ce procédé requiert un outillage coûteux et impose de fabriquer un grand nombre de nappes différentes en fonction des largeurs de nappes nécessitées par les dimensions de penumatiques à réaliser.

D'après l'état de la technique, on connait également d'autres façons de préparer le renforcements pour pneumatiques. Selon l'une des façons, le ou les fils de renforcement sont disposés autour d'un noyau définissant la surface intérieure du pneumatique, l'un après l'autre et en continu, pour former un renforcement pour pneumatique. On en trouve des exemples dans les brevets US 582 855, US 1 328 006 ou US 1 321 402. Cependant, la mécanisation de la pose du fil autour d'un noyau est très complexe du fait que le fil se développe dans des directions axiales, radiales, axiales et radiales dans l'espace extérieur audit noyau.

Selon un autre principe, le fil de renforcement est enroulé autour de deux tringles ayant leur forme circulaire finale, ou bien encore fendues et disposées à plat pendant que l'on enorule le fil. Ceci est illustré par exemple par les brevets WO83/02749, US 2 139 840 ou US 1 349 390. Là encore, le procédé présente de nombreux inconvénients liés au fait que l'on construit un renforcement très éloigné de sa forme finale dans le pneumatique, particulièrement s'il est construit à plat. Dans le cas où ledit renforcement est construit autour de tringles circulaires, il faut effectuer une conformation par élévation radiale de la zone médiane des fils disposés entre deux tringles, ce qui se fait habituellement au moyen de dispositifs pneumatiques, donc peu précis du point de vue du respect des géométries.

Ces techniques connues de fabrication d'un renforcement pour pneumatiques à partir d'un seul fil sont donc complexes et peu performantes.

Le but de la présente invention est de proposer un procédé de réalisation d'un renforcement non plus à partir de produits semi-finis sous forme de nappe mais à partir d'un seul fil, qui ne présente pas les inconvénients des procédés antérieurs. L'invention se rapporte à la manière selon laquelle le fil est disposé pour constituer ledit renforcement.

Selon l'invention, le procédé de fabrication d'un renforcement pour pneumatique est caractérisé en ce que

a) un fil continu est accroché à des moyens de retenue disposés en deux cercles séparés d'une distance correspondant à la longueur du trajet d'un fil d'un côté à l'autre du renforcement, de sorte que le fil ainsi disposé définit un cylindre par une pluralité d'allers et retours d'un moyen de retenue à un autre,

b) par un mouvement approprié de moyens de retenue, le fil ainsi disposé est rabattu sur et autour d'un noyau rigide définissant la forme de la surface interieure du pneumatique.

c) l'ancrage du fil étant assuré, les moyens de retenue sont dégagés.

La solution selon l'invention consiste donc à construire un cylindre constitué de tronçons de fils de renforcement sensiblement parallèles à l'ax dudit cylindre, retenus à chaque extrémité par des moyens de retenue, le renforcement complet étant constitué d'un seul fil continu accroché à tous les moyens de retenue; ensuite, les moyens de retenue des fils sont déplacés de mainère à ce que le renforcement ainsi consititué entoure un noyau rigide définissant la surface intérieure du pneumatique, c'est-à-dire de manière à ce que ledit renforcement prenne sa place dans le futur pneumatique.

Le terme "fil" est utilisé pour désigner le matériau de renforcement en général alors que "tronçon de fil" désigne plus précisément la quantité de fil disposée entre deux moyens de retenue situés de part d'autre du noyau.

L'ancrage du fil doit être réalisé par tout moyen compte tenu de la fonction du renforcement. Lorsque ledit renforcement est une armature de carcasse de pneumatique, l'ancrage doit permettre à ladite carcasse ainsi réalisée de résister à la pression de gonflage du pneumatique. On utilisera par exemple une tringle.

Grâce à ce procédé, la constitution d'un renforcement par accrochage d'un fil à des moyens de retenue se fait dans une configuration simple où tous les tronçons de fils entre deux moyens de retenue sont disposés sensiblement parallèlement entre eux pour former un cylindre à axe parallèle à l'orientation desdits tronçons. De manière équivalente, les cercles formés par les moyens de retenue peuvent être de diamètres légèrement différents, de sorte que les tronçons de fil définissent alors un tronc de cône.

Ainsi donc, grâce au recours auxdits moyens de retenue du fil, on peut débuter de mainère très simple la construction d'un renforcement que l'on disposera autour d'un noyau rigide, le recours à un noyau rigide étant très favorable au point de vue régularité et précision de fabrication. Par "noyau rigide", on entend un noyau substantiellement non déformable, par exemple du genre de ceux que l'on trouve dans le moules utilisés pour la fabrication de pneumatiques en polyuréthanne, comme illustré par le brevet US 4 279 856.

L'illustration de l'invention faite dans la suite montre la fabrication d'une armature de carcasse en rayonne pour pneumatique pour véhicule de tourisme. Cependant, il est bien évident que la portée de l'invention ne se limite pas à la fabrication de ce seul type de renforcement, ni à ce seul type de fil, mais peut également trouver un champ d'application pour les ceintures de pneumatique.

Grâce à l'invention, il est possible de débuter la fabrication d'une armature de carcasse immédiatement en forme circulaire tout en s'affranchissant du diamètre des tringles du futur pneumatique.

Les figures jointes illustrent l'invention de manière non limitative; elles permettent d'en bien comprendre le fonctionnement et d'en saisir tous les avantages.

La figure 1 est une perspective montrant la disposition générale d'une machine selon l'invention.

La figure 2 est une coupe montrant la disposition de différents organes à différents stades.

La figure 3 illustre un mouvement particulier.

Les figures 4 à 8 illustrent l'ancrage de l'armature de carcasse à une tringle.

Les figure 9 montre la commande des mouvements de certains organes de la machine.

La figures 10 et 11 montrent en détail le départ du cycle de fonctionnement de la machine.

Les figures 12 et 12a montrent la fin du cycle de fonctionnement de la machine.

Les figures 13 et 14 sont des vues dans des plans perpendiculaires l'un de l'autre de certains organes de la machine.

La figure 15 illustre une configuration du renforcement en cours de fabrication.

Les figures 16 à 18 illustrent une variante de réalisation de l'invention.

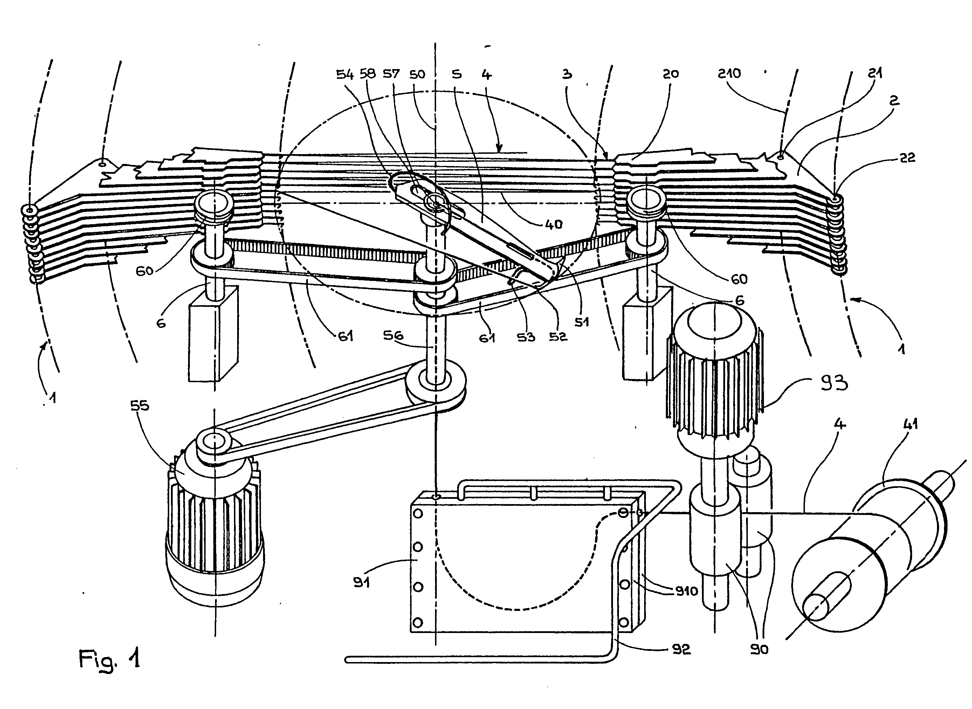

L'appareil selon l'invention, dont on voit la présentation générale des organes principaux à la figure 1, comporte deux couronnes 1 de bras de support 2. Ces couronnes 1 et le pneumatique à fabriquer sont coaxiaux. L'extrémité 20 axialement intérieur des bras de support 2 peut être déplacée axialement et radialement; cela signifie que le mouvement de ladite extrémité 20 a au moins une composante radiale et une composante axiale. Ladite extrémité 20 supporte des moyens de retenue 3 du fil 4. Les bras de support 2 comportent en outre un point d'articulation 21 et un point de commande 22. Les points d'articulation 21 de tous les bras de support 2 forment un cercle 210 de diamètre invariable, coaxial au pneumatique à fabriquer, déplaçable axialement. Les points de commande 22 peuvent être déplacés, tous simultanément dans chaque couronne 1, axialement par rapport aux points d'articulation 21. Ces deux mouvements (déplacement axial des points d'articulation 21 et déplacement des points de commande 22 par rapport aux points d'articulation 21) permettent de conférer aux bras de support 2 les mouvements voulus pour que leurs extrémités 20 puissent décrire le mouvement voulu lors du rabattement du fil 4 autour d'un noyau. Le rabattement autour d'un noyau est expliqué en détails plus loin. Lesdites extrémités 20 forment donc un cercle coaxial au pneumatique à fabriquer, de rayon variable et de position axiale variable pour pouvoir procéder au rabattement du fil sur et autour d'un noyau. La position axiale variable permet en plus de s'adapter à différentes longueurs de tronçon de fil. On aperçoit que les deux couronnes 1 sont symétriques; cependent, cette symétrie n'est pas indispensable, elle est simplement fort commode pour réaliser un pneumatique dont l'architecture est symétrique. De préférence, les mouvements des deux couronnes sont coordonnés et symétriques.

L'appareil comporte également un bras rotatif 5 dont l'axe de rotation 50 est sensiblement perpendiculaire à l'axe des couronnes 1, et est de préférence situé radialement à l'extérieur du cylindre défini par les moyens de retenue 3 du fil 4. Ledit axe 50 est situé axialement sensiblement à mi-distance entre lesdits moyens de retenue 3. Ce bras rotatif 5 est entraîné par un moteur 55 par l'intermédiaire d'un arbre de commande 56. Il faut que, à chaque tour de bras rotatif 5, les couronnes 1 aient tourné d'un angle correspondant à l'écart entre deux moyens de retenue 3 adjacents. Une pointe effilée 51 facilite le passage de l'extrémité du bras rotatif 5 entre deux moyens de retenue 3 adjacents. Le sens de rotation du bras rotatif 5 repérable sur la figure 1 par cette pointe effilée 51 orientée dans le sens du mouvement. Le bras rotatif 5 porte des moyens de dévidage de fil comportant essentiellement, dans cet exemple, un orifice 52 de sortie du fil 4 situé en arrière par rapport au mouvement. Puis, on peut également prévoir, entre l'extrémité et le centre du bras rotatif 5, un ergot 53 soulevant le fil par rapport au bras rotatif 5.

A la couronne 1 de droite à la figure 1, le fil 4 est accroché au moyen de retenue 3 situé au dessus du bras rotatif 5 qui doit donc passer non pas dans l'espace situé entre le moyen de retenue 3 où le fil est déjà accroché et le moyen de retenue libre ajdacent, mais dans l'espace entre le premier moyen de retenue 3 encore libre et le moyen de retenue suivant. L'ordre dans lequel on vient de parler des moyens de retenue 3 correspond à l'ordre dans lequel ils doivent apparître à hauteur du bras rotatif 5, ce qui définit le sens de rotation des deux couronnes 1, à savoir de bas vers le haut sur la figure 1. A la couronne 1 de gauche à la figure 1, le fil 4 est accroché au moyens de retenue 3 situé au dessous du bras rotatif 5 qui doit donc passer dans l'espace situé entre le moyen de retenue 3 où le fil est déjà accroché et le moyen de retenue libre adjacent.

Au centre du bras rotatif 5, se trouve fixé un élément de maintien 54 de la tension du fil 4; du fait que l'axe de rotation 50 est radialement à l'extérieur du cylindre défini par les moyens de retenue 3, l'accrochage du fil sur les moyens de retenue 3 situés à droite sur la figure 1 se fait à un endroit de la trajectoire de l'orifice 52 au-delà de point où le mouvement dudit orifice 52 a provoqué l'appel d'une longueur maximale du fil 4, à savoir un tronçon 40 de fil 4. Ce point est sur la droite définie par le dernier moyen de retenue 3 où le fil 4 est accroché et l'endroit 57 où le fil sort de l'arbre de commande 56. Ledit élément de maintien 54 constitué dans cet exemple par une tige courbe doit être conformée de manière à libérer le fil 4 dès qu'il n'est plus nécessaire de le retenir. Un tel élément de maintien 54 n'est pas toujours indispensable lorsque les moyens de compensation de longueur prévus par ailleurs suffisent à garantir que le fil 4 est toujours tendu.

En son centre, le bras rotatif 5 comporte un évidement 58 permettant d'adapter la distance séparant l'orifice 52 de l'axe de rotation 50 à l'écart séparant les moyens de retenue 3 d'une couronne 1 par rapport à l'autre, ledit écart étant conditionné par la longueur de tronçon 40 de fil 4 à poser.

Afin de garantir une présentation adéquate des bras de support 2 par rapport au bras rotatif 5, ou peut prévoir, de chaque côté, un arbre 6 portant une cannelure 60 hélicoïdale engrenée sur les bras de support 2 et ceci, au voisinage immédiat de la trajectoire du bras rotatif 5. Ainsi, le positionnement de l'extrémité 20 des bras de support 2 est affermi pendant le passage du bras rotatif 5. Bien sûr, la rotation de ces arbres 6 est synchronisée avec celle du bras rotatif 5, par la transmission par courroies crantées 61.

Le fil 4 est déroulé hors d'un bobine 41 à une vitesse imposée par deux rouleaux 90 appuyés l'un sur l'autre et entre lesquels le fil 4 est introduit. La vitesse de ces rouleaux est réglée par un moteur 93 dont la vitesse est asservie à la consommation moyenne de fil 4. Ensuite, le fil 4 passe dans un sytème 91 assurant une tension sensiblement constante et la compensation de longueur nécessaire du fait que l'appel de fil par le bras rotatif 5 est variable. Le système 91 représenté fonctionne grâce à une pression d'air sec (alimentation en air par le tuyau 92) agissant sur le fil 4 passant entre deux plaques 910 parallèles, légèrement plus espacées que nécessaire pour que le fil 4 glisse librement entre elles. Le fil 4 y forme une boucle représentée en traits discontinus dont la grandeur moyenne est maintenue constant par l'asservissement commandant la vitesse du moteur 93. Le fil 4 rejoints ensuite le centre de l'arbre rotatif 5 par un trou aménagé au centre de l'arbre de commande 56, puis rejoint l'orifice de sortie 52.

Selon l'invention, le procédé de fabrication d'un pneumatique est caractérisé en ce que:

a) d'une part, une ou plusieurs couche(s) de caoutchouc est(sont) appliquée(s) sur un noyau rigide 7 définissant la forme de la surface intérieure du pneumatique, et d'autre part un fil 4 d'un continu est accroché à des moyens de retenue 3 disposés en deux cercles séparés d'une distance correspondant à la longueur du trajet d'un fil 4 côté à l'autre du renforcement de sorte que le fil 4 ainsi disposé définit un cylindre par une pluralité d'aller et de retours d'un moyen de retenue 3 à un autre,

b) ledit noyau rigide 7 est inséré à l'intérieur dudit cylindre,

c) par un mouvement approprié des moyens de retenue 3, le fil 4 ainsi disposé est rabattu sur et autour dudit noyau 7,

d) l'ancrage du fil étant assuré, les moyens de retenue 3 sont dégagés,

e) la fabrication du pneumatique est poursuivie.

La couche de caoutchouc dont est revêtu le noyau rigide immobilise les tronçons 40 de fil 4 lorsqu'ils sont posés sur le noyau 7. Elle participe donc à l'ancrage du fil 4. L'ancrage du fil 4 est également assuré par une tringle comme connu en soi.

Après cette présentation générale, on va maintenant décrire l'invention plus en détail en suivant le cycle de fabrication d'un renforcement.

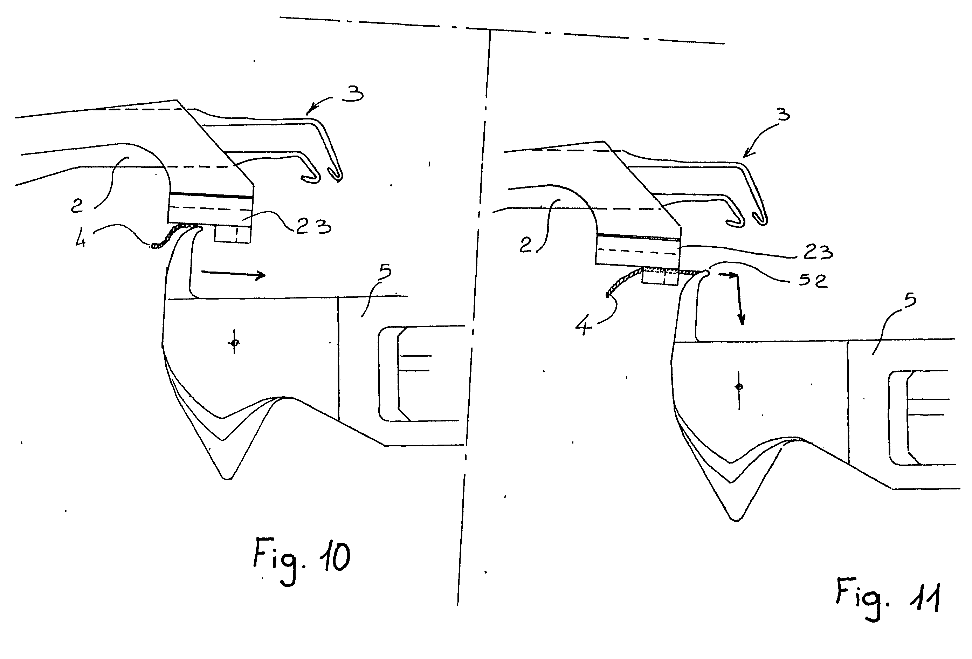

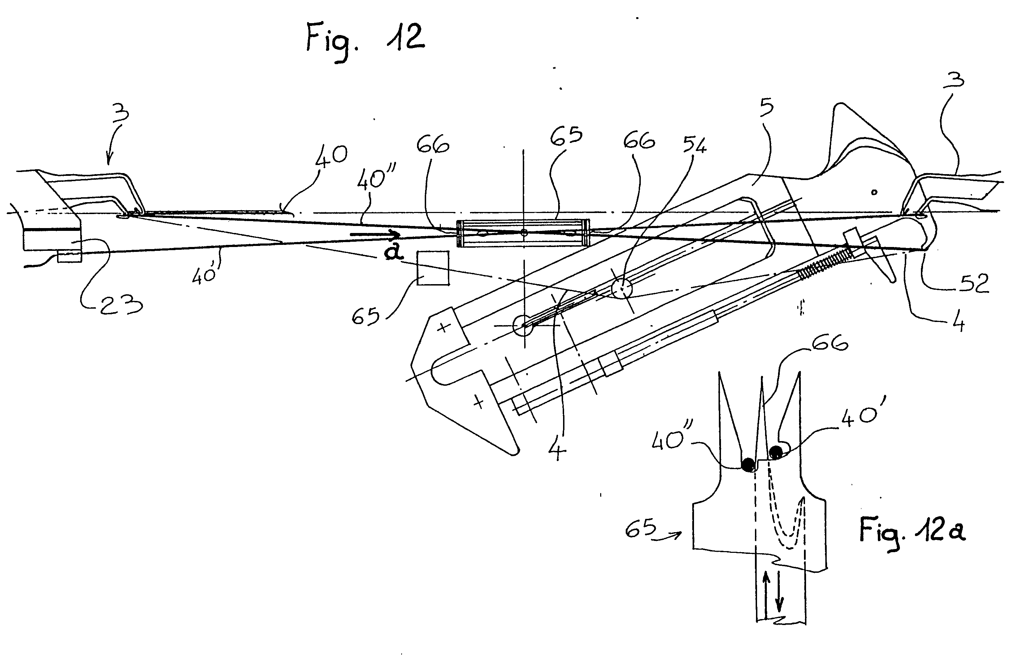

Pour débuter la fabrication du renforcement, le fil 4, enfilé dans tous les organes de pose constitués par le bras rotatif 5, l'arbre de commande 56, le système 91 compensateur de tension et les rouleaux 90 d'entraînement, est d'abord accroché à une pince 23 solidaire de l'un des bras de support 2 de la couronne 1 de gauche sur la figure 1. Comme représenté à la figure 10, le bras rotatif 5 à l'extrémité arrière duquel dépasse le fil 4 est reculé à hauteur du bras de support 2 portant la pince 23. Puis on écarte axialement les couronnes 1 de bras de support 2 de mainère à ce que la pince 23 saisisse le fil 4 (comme montré à la figure 11), puis prennent l'écartement correspondant à la position d'accrochage du fil 4 aux moyens de retenue 3.

L'extrémité libre du fil 4 étant ainsi maintenue au voisinage des moyens de retenue 3 que le bras rotatif 5 vient juste de laisser au dessus et derrière lui, la rotation dudit bras rotatif 5 provoque l'appel de la quantité de fil 4 nécessaire à la réalisation progressive du renforcement en accrochant le fil 4 successivement à tous les moyens de retenue 3, en effectuant autant de tours qu'il y a de moyens de retenue 3 sur une couronne 1, réalisant ainsi un cylindre formé d'autant de tronçons 40 de fil 4 qu'il y a de moyens de retenue 3 sur les deux couronnes 1. A titre d'exemple pour réaliser l'armature de carcasse en rayonne d'un pneumatique pour véhicules de tourisme, on utilise des couronnes 1 comportant de 500 à 700 moyens de retenue 3.

Lorsque le fil 4 est accroché à tous les moyens de retenue 3, un cylindre complet est formé par les tronçons 40 du fil 4; le fil 4 est solidarisé au tronçon 40' de fil 4 rejoignant la pince 23, par exemple par un point de colle, puis il est coupé.

A cette fin, on voit à la figure 12 que la rotation du bras rotatif 5 est arrêtée lorsque le fil 4 est retenu par l'élément de maintien 54 constitué ici par une prohéminence cylindrique dont la face supérieure est un plan incliné. Ensuite un poussoir 65 soulève le fil 4 pour le libérer dudit élément de maintien 54. Sous l'action du système 91 compensateur de tension, le fil 4 se tend pour former un tronçon 40'' rectiligne entre l'orifice 52 de sortie du bras rotatif 5 est le dernier moyen de retenue 3 auquel le fil 4 a été accroché. Ce tronçon 40'' et celui 40' rejoignant la pince 23 se croisent alors à l'aplomb d'une tête 65, qui est approchée contre lesdits tronçons 40' et 40''. Ladite tête 65 comporte une rampe par laquelle on amène du polyéthylène liquifié pour coller les tronçons de fils 40' et 40'' là où ils se croisent, et elle comporte des couteaux 66 mieux visibles à la figure 12a (vue dans le sens de la flèche "a" à la figure 12), assurant le cisaillement des tronçons 40' et 40'' rejoignant respectivement la pince 23 et l'orifice de sortie 52 du bras rotatif 5.

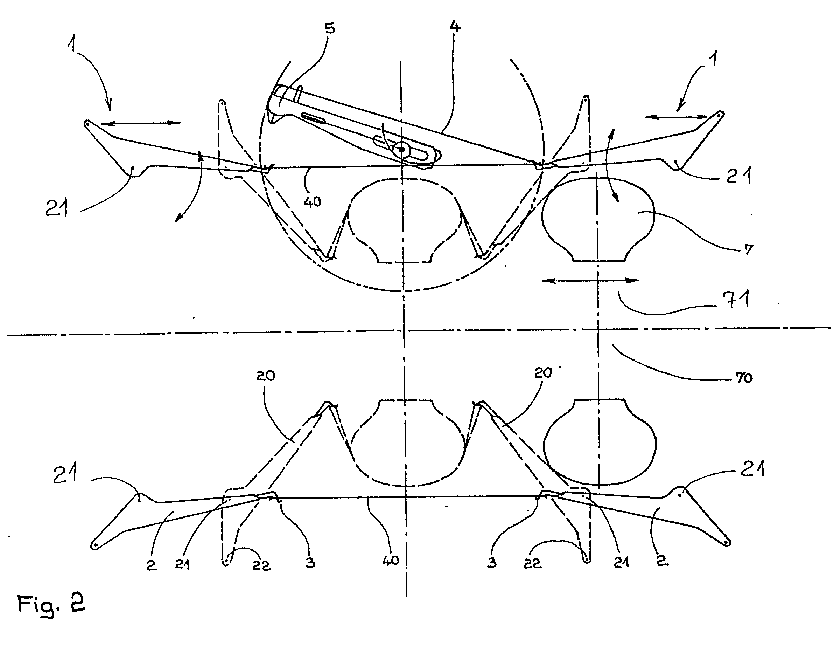

En consultant la figure 2, on voit que l'appareil est pourvu de moyens permettant d'insérer un noyau 7 radialement à l'intérieur du cercle formé par les moyens de retenue 3. Pedant la mise en place des tronçons 40 de fil 4, cet espace intérieur doit rester libre pour ne pas gêner le mouvement du bras rotatif 5. Lesdits moyens permettant d'insérer un noyau 7 sont essentiellemnt constitués par un espace libre 70 situé radialement à l'intérieur de l'une des couronnes 1 de bras de support 2, ledit espace 70 étant plus grand que l'encombrement du noyau 7, pour au moins une position desdits bras de support 2 et par un système d'avancée (schématisé par une flèche 71 à la figure 2) du noyau 7 qui introduit celui-ci à l'intérieur des et entre les couronnes 1 ou l'extrait hors de sa position entre lesdites couronnes 1.

Lorsque la phase de mise en place des tronçons 40 de fil 4 est terminée, le moyau préalablement revêtu d'une couche de caoutchouc constituant la peau intérieure du pneumatique et participant à l'ancrage des fils 4, est introduit à l'intérieur du cylindre constiué par les tronçons 40 de fil 4. On a représenté en traits pleins le noyau 7 dans une position intermédiaire pendant son insertion et en traits discontinus le noyau 7 en position médiane entre les couronnes 1. De même la représentation en traits pleins des bras de support 2 correspond à la position qu'ils occupent pendant l'accrochage du fil 4 (voir figure 1) et pendant l'insertion du noyau 7, alors que le tracé en traits discontinues montre une position ultérieure des mêmes bras de support 2 en cours de rabattement. La superposition dans une même figure de ces stades successifs permet de bien comprendre les mouvements à réaliser. De même, le rappel du mouvement du bras rotatif 5 sur la même figure 2 permet de bien se rendre compte de l'utilité de l'introduction du noyau 7 après la réalisation du cylindre constitué par les tronçon 40 de fil 4.

Si l'on ne prévoit pas cette insertion par l'intérieur d'une des deux couronnes 1, on est conduit à réaliser de cylindre de tronçons 40 de fil 4 alors que le noyau 7 se trouve déjà axialement entre les couronnes 1, ce qui obligerait donc à réaliser ledit cylindre à une position diamétrale exagérément agrandie pour ne pas gêner le mouvement du bras rotatif 5. Cela aboutirait à un appareil encombrant et allongerait le mouvement de rabattement des bras de support 2, mouvement qui est expliqué plus en détail ci-dessous.

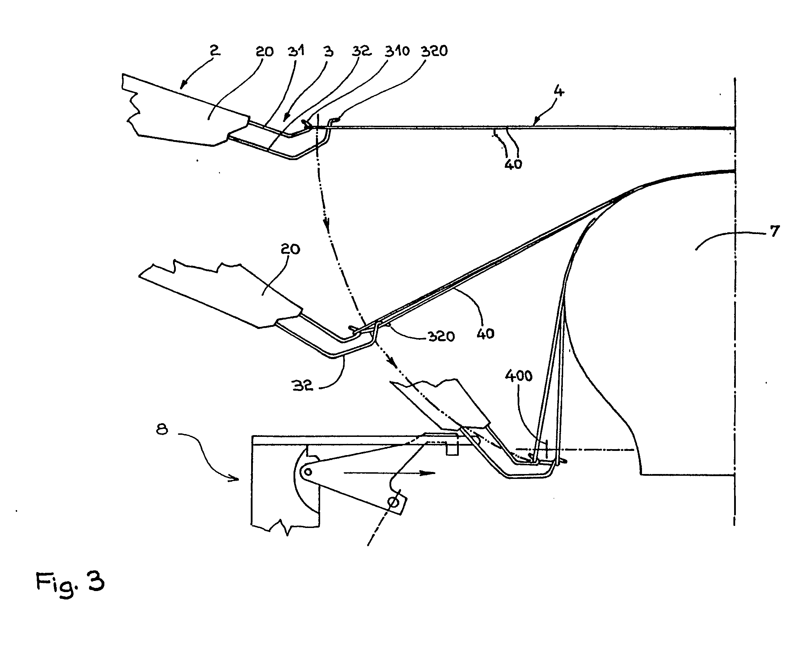

A la figure 3, on voit que les moyens de retenue 3 sont constitués par deux crochets 31 et 32. Dans la phase de fabrication expliquée ci-dessus, seul le premier crochet 31 est nécessaire pour assurer l'accrochage du fil 4. Il est donc conformé de manière à retenir le fil 4 présenté par le bras rotatif 5. On notera que les projections dans un plan radial de la pointe 310 d'extrémité sont de sens opposés dans l'une et l'ature couronne 1. Le second crochet 32 est disposé de manière telle que, à ce stade, chacun des deux tronçons 40 (superposés à la partie supérieure de la figure 3) est disposé de part et d'autre dudit second crochet 32.

Lors du rabattement de l'extrémité 20 des bras de support 2 radialement vers l'intérieur, et axialement vers le noyau 7, le second crochet 32, dont la pointe 320 est conformée à cette fin, accroche l'un des tronçons 40 de fil 4 pour amorcer la formation d'une boucle 400. On notera que ce rabattement se fait en commandant le rapprochement axial des points d'articulation 21 de maînère coordonnée entre les deux couronnes 1, tout en maintenant une poussée sur les points de commande 22. Cette poussée équilibre la tension des fils 4 dont les variations doivent de préférence être limitées (par exemple, des variations dans un rapport de un à deux sont satisfaisantes). De la sorte, dès qu'il y a rapprochement axial des couronnes 1, il y a automatiquement basculement des extrémités 20 des bras de support 2 radialement vers l'intérieur pour maintenir la tension dans les fils 4. Ainsi, ce sont les fils 4 eux-mêmes qui définissent la trajectoire des moyens de retenue 3 au cours du rabattement des bras de support 2 autour du noyau 7.

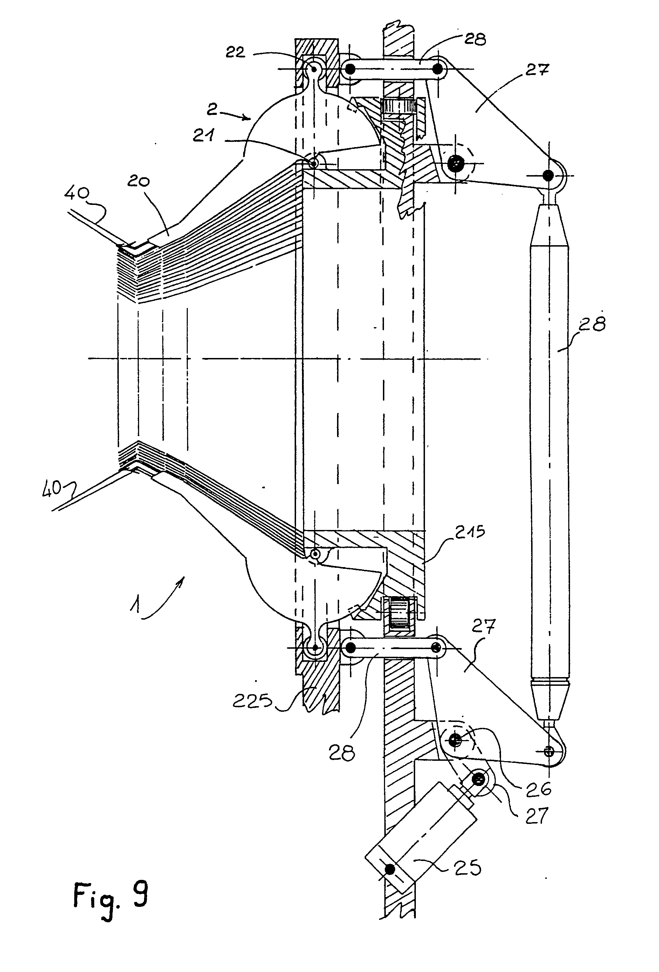

La figure 9 permet de bien comprendre comment on peut réaliser ladite poussée pour que la tension dans le fil 4 soit sensiblement constante, quelle que soit l'inclinaison des tronçons 40 par rapport aux extrémités 20 des bras de support 2 (voir figure 2). Les points d'articulation 21 des bras de support 2 sont, pour chaque couronne 1, solidaires d'un plateau 215. Ces deux plateaux 215 peuvent être approchés ou éloignés l'un de l'autre, de préférence de façon symétrique. Les points de commandes 22 de chaque couronne 1 sont tous immobilisés axialement par rapport à un plateau 225 et peuvent se déplacer radialement le long de cesdits plateaux 225. En considérant isolément la couronne 1 montée sur les plateaux 215 et 225, l'écartement relatif des plateaux 215 et 225 commande le basculement des bras de support 2 alors que la position axiale des plateaux 215 détermine la position axiale de chaque couronne 1 de bras de support 2. Un vérine 25, à poussée constante, sollicite en rotation un arbre 26 par l'intermédiaire d'un basculeur 27. Ce mouvement est renvoyé par des basculeurs 27 et des tiges 28 qui transmettent la poussée nécessaire pour obtenir une tension sensiblement constant dans les tronçons 40 de fil 4. On notera que cette poussée est variable. Elle doit être d'autant plus faible que les tronçons 40 forment un angle plus important avec l'extrémité 20 des bras de support 2. On obtient cette poussée en adaptant la longeur des bras des basculeurs 27, les angles que forment les bras des basculeurs 27, ainsi que les angles relatifs entre les basculeurs 27 et les tiges 28.

Dans cette mise en oeuvre particulière du procédé de fabrication, l'ancrage du fil 4 comporte la pose d'une tringle 45, effectuée de la manière suivante:

a) au cours du rabattement, chaque moyen de retenue 3 amorce la création d'une boucle 400 dans le fil 4 à l'endroit où ledit fil 4 repart vers un moyen de retenue 3 du côté axialement opposé,

b) certaines au moins des boucles 400 ainsi amorcées sont fermées à un niveau radialement extérieur aux moyens de retenue 3,

c) on insère plusieurs spires d'un profilé dans le boucles 400 ainsi créées,

d) on solidarise lesdites spires pour qu'elles constituent une tringle 45.

Les quelques spires de profilé constituent ainsi une tringle 45. De préférence, ledit profilé a une forme incurvée, dont la partie convexe est orientée radialement vers l'axe de rotation du pneumatique en cours de fabrication. De la sorte, les spires successives se superposent très facilement les unes sur les autres.

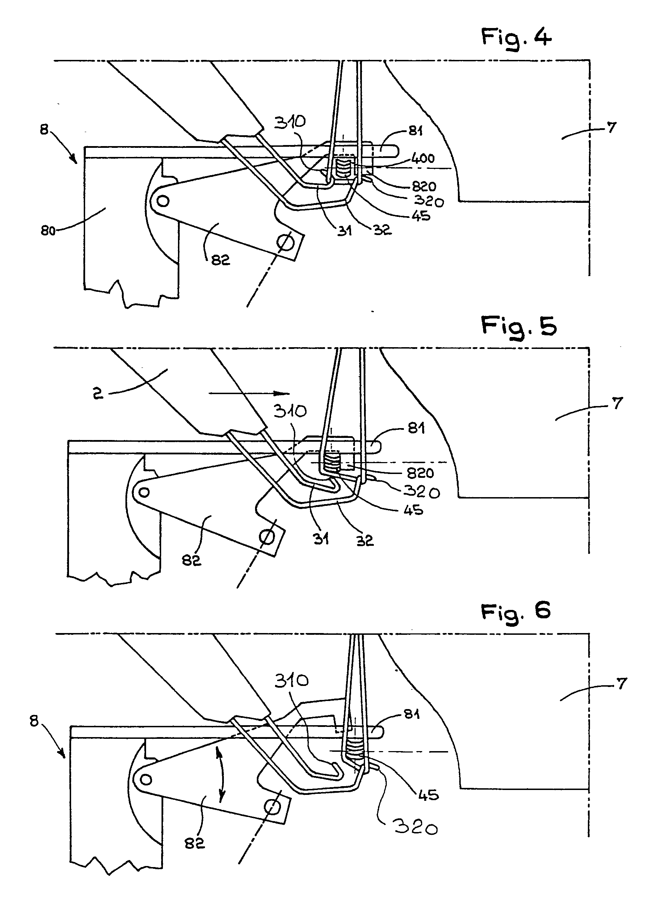

L'appareil selon l'invention comporte encore (voir figures 4 à 8) un dispositif 8 utilisé lors de l'ancrage du fil 4 à une tringle 45 de chaque côté du noyau 7. L'utilisation de ce dispositif 8 est adaptée à la forme des crochets 31 et 32 dont les pointes 310 et 320 sont orientées axialement selon des sens opposés, ce qui conditionne les mouvements lors du décrochage.

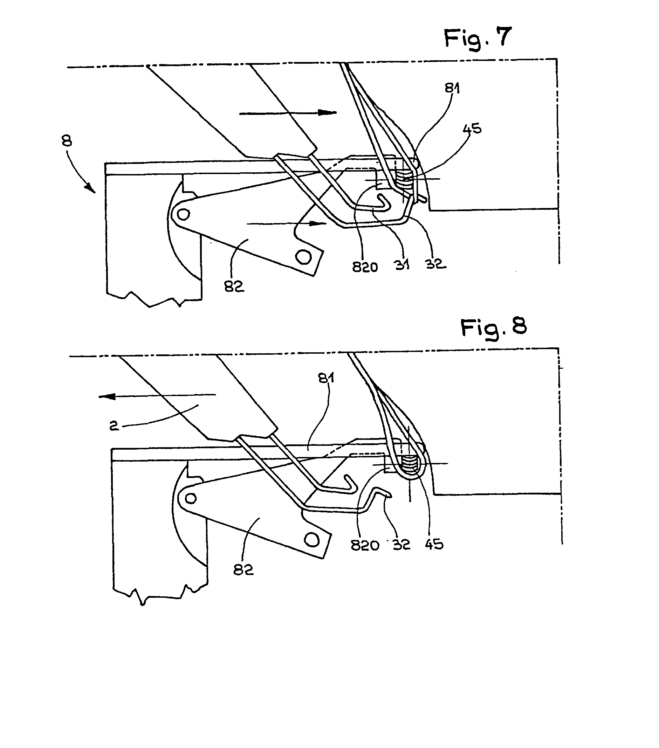

Ce dispositif 8 comporte plusieurs ensembles 80, de préférence au moins cinquante sur la circonférence. Ces ensembles 80 sont solidaires entre eux et mobiles axialement (simultanément). Ils sont essentiellement constitués d'une tige droite 81, parallèle à l'axe des couronnes 1, donc à l'axe du noyau 7, c'est-à-dire à l'axe du pneumatique en cours de fabrication, et d'un doigt 82 basculant. La largeur du noyau 7 au niveau des tringles 45 étant inférieure à la largeur maximale, il y a deux positions correspondant à la retenue par un tringle 45 des fils 4 tendus: l'une contre le noyau 7, qui est last position finale de la tringle 45 et un autre écartée du noyau 7. Le rabattement des moyens de retenue 3 est arrêté à la première rencontrée de ces positions. Le dispositif d'ancrage 8 est rapproché axialement du noyau 7 (voir figure 4) de manière à ce que les tiges droites 81 ferment un quadrilatère par ailleurs formé par le fil 4, c'est-à-dire barrent l'ouverture de certaines des boucles 400 et détermine le diamètre extérieur des tringles 45. Ceci permet de créer un chemin de guidage pour l'insertion de la tringle 45. Celle-ci est constituée par plusieurs tours d'un profilé que l'on introduit tangentiellement dans les boucles 400 devant l'un des ensembles 80, et que l'on enfile complètement en le poussant. La tringle 45 est ensuite terminée par des agrafes enserrant les couches de profilé à plusieurs endroits sur la circonférence et particulièrement dans les zones de recouvrement du début et de la fin de la spirale formée par ledit profilé, ou par tout moyen de fixation adéquat. Les crochets 31 et 32 peuvent alors être dégagés. Cela se fait grâce aux doigts 82 qui maintiennent axialement la tringle 45 par leurs extémités 820 orientées vers le base et abaissées axialement du côté intérieur de la tringle 45, pendant que les bras de support 2 sont repoussés axialement vers le noyau 7. Ce mouvement (voir figure 5) permet de dégager tous les premiers crochets 31. Ensuite, les doigts 82 sont soulevés, le dispositifs 8 s'éloigne axialement du noyau pour pouvoir abaisser les extrémités 820 axialement à l'extérieur de la tringle 45 (figure 6 et 7). La tringle 45 est plaquée contre le noyau 7 par le rapprochement axial du dispositif 8 vers le noyau, pendant que les bras de support 2 sont éloignés axialement (figures 7 et 8), ce qui dégage les derniers crochets 32. La flexibilité desdits chrochets 31 et 32 doit être compatible avec la nécessité qu'ils reprennent exactement leur place dans chaque couronne 1 après déchrochage, même si tous les crochets d'un même type ne se décrochent pas tous simultanément.

A ce stade, le noyau 7 portant le renforcement ancré à des tringles peut être extrait de l'appareil. La fabrication du pneumatique est poursuivie, le cas échéant par la réalisation d'atures renforcements constituant aussi l'armature de carcasse, par la pose des renforcements de sommet (ceinture), des flancs et de la bande de roulement.

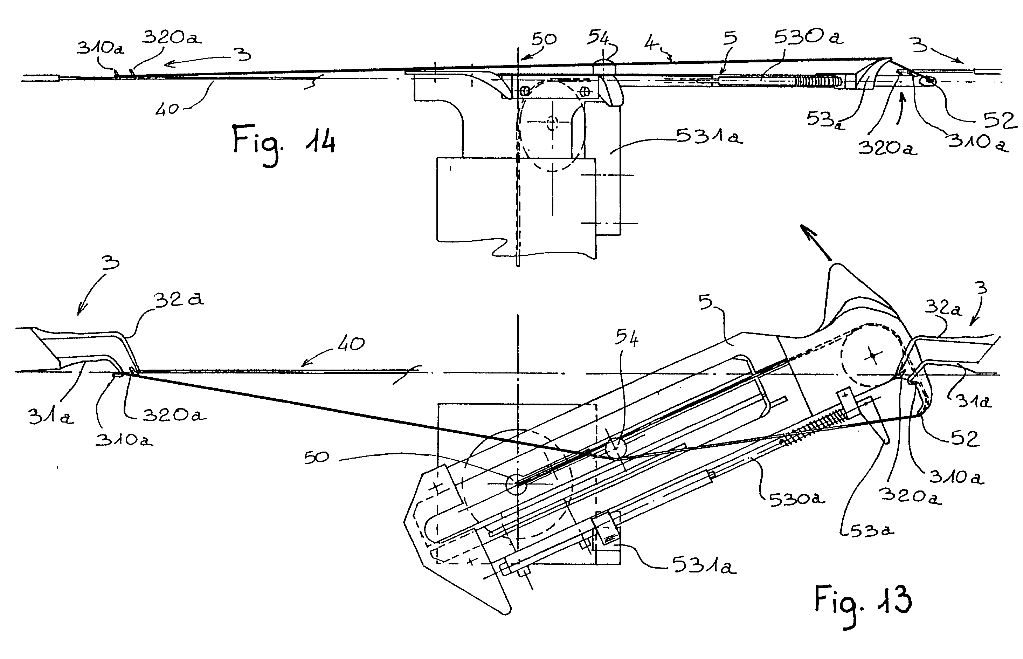

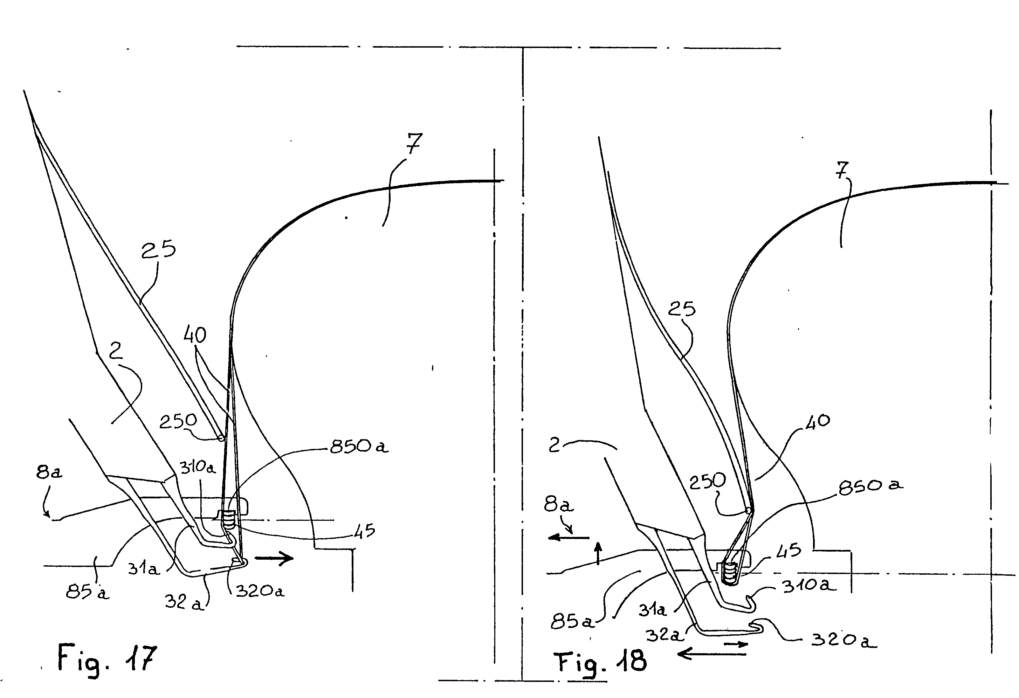

On va à présent décrire des variantes de réalisation de certains organes, en relation avec les figures 13 à 18.

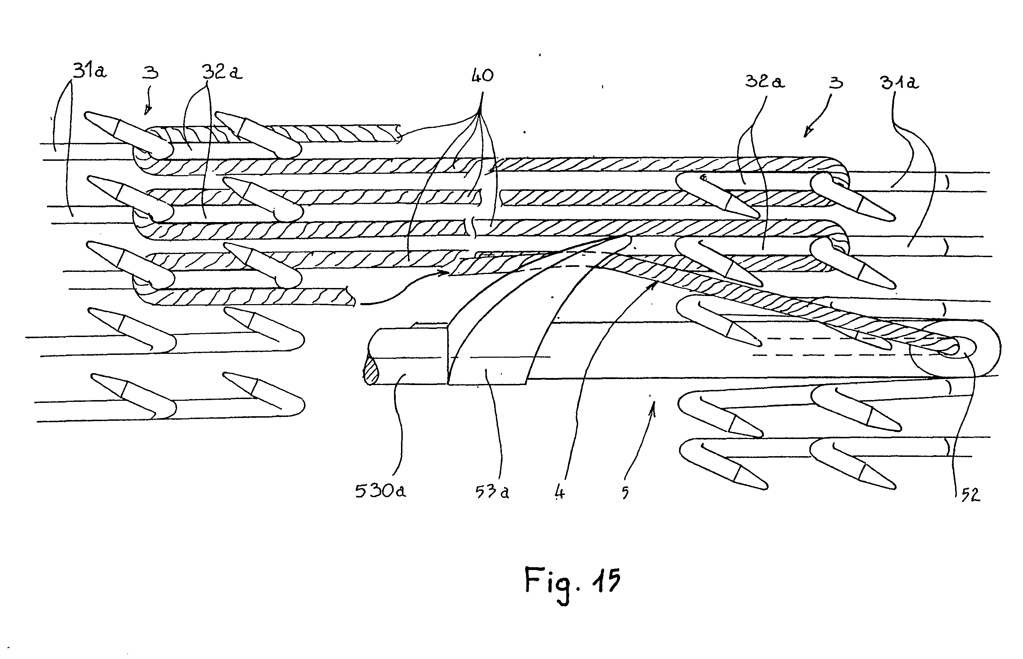

Le bras rotatif 5, représenté aux figures 13 et 14 (ainsi qu'à la figure 12), et télescopique pour que le longueur séparant l'orifice de sortie 52 de l'axe de rotation 50 puisse s'adapter automatiquement à la dimension du pneumatique à fabriquer. Par exemple, on utilise une commande à câble-pour raccourcir ladite longueur et une commande à tige et à billes pour l'allonger. Ladite longueur varie donc comme la moitié de l'écartement axial entre les moyens de retenue 3 d'une couronne 1 par rapport à la couronne 1 axialement opposée, et ce dans la plage où la variation de cet écartement correspond au réglage de la machine selon la dimension du pneumatique à fabriquer, ou plus précisément, s'agissant de la construction d'un renforcement pour pneumatique, selon la grandeur du tronçon 40 de fil 4 à accrocher aux moyens de retenue 3.

Pour le départ du fonctionnement de la machine en utilisant la pince 23, lesdites couronnes 1 peuvent se rapprocher axialement l'une de l'autre au-delà de la plage de réglage, sans que la longueur du bras rotatif télescopique 5a soit modifiée.

A la même figure 13, on voit que l'orientation de la pointe 320a est sensiblement identique à l'orientation de la pointe 310a alors que dans la réalisation décrite ci-dessus, les orientations des pointes 310 et 320 divergeaient notablement.

Les figures 13 et 14 sont des vues dans des plans perpendiculaires l'un par rapport à l'autre. On y voit que l'orientation desdites pointes 310a et 320a est axialement vers l'extérieur de la machine, tangentiellement de sens opposés (voir figure 14), radialement vers l'intérieur pour la couronne 1 de droite à la figure 14, c'est-à-dire du côté où le bras rotatif 5 pénètre à l'intérieur du cylindre formé par les tronçons 40 de fil 4, et radialement vers l'extérieur pour la couronne 1 de gauche à la figure 14, c'est-à-dire du côté où le bras rotatif 5 sort du cylindre formé par les tronçons 40 de fil 4. En général, la pointe desdits crochets (310, 320, 310a, 320a) est située du plan dans lequel est comprise la base desdits crochets. Les moyens de retenue 3 (crochets 31a et 32a) sont donc interchangeables entre les deux couronnes 1. La conception de ces moyens de retenue 3 et la présentation du fil 4 sur lesdits moyens de retenue 3 est déterminante pour que les tronçons 40 de fil 4 forment une figure en "S" et on pas en "8" lorsqu'ils définissent ledit cylindre de tronçons 40. Cela signifie qu'il ne peut pas y avoir radialement de superposition de fils. Cette figure dite en "S", sans susperposition de fil, apparaît bien à la figure 15. S'il y a superposition de fils, on retrouvera cette superposition de fils dans le pneumatique, ce qui peut être indésirable pour le fonctionnement du pneumatique. La figure 15 permet également de bien voir comment il convient de présenter le fil 4 aux moyens de retenue 3 de droite et comment ledit fil 4 se dispose sur tous les moyens de retenue 3. A la couronne 1 de gauche, le fil 4 est présenté aux moyens de retenue 3 alors que le bras rotatif 5 sort du plan de la figure, passe au dessus des moyens de retenue 3 encore libres, l'ergot 53a étant en position abaissée.

Pour optimiser l'accrochage du fil 4 à la fois sur les moyens de retenue 3 de la couronne 1 de gauche et de la couronne 1 de droite, il peut être avantageux que l'intervention de l'ergot 53a ne soit pas symétrique. Ledit ergot 53a est soulévé par l'action d'une tige 530a sollicitée par une came 531a pour présenter le fil 4 levé devant la couronne 1 de droite comme représenté à la figure 14. Du côté axialement opposé, l'ergot 53a, en position de repos, soulève beucoup moins le fil 4. Le bras rotatif 5 portant l'ergot 53a étant télescopique, ladite tige 530a doit bien sûr être elle aussi télescopique.

La conception des moyens de retenue 3 de cette variante de réalisation autorise l'accrochage du fil 4, puis permet la formation d'une boucle 400 lors du rabattement comme expliqué ci-dessus, tout en permettant le décrochage des moyens de retenue 3 après insertion d'un tringle 45.

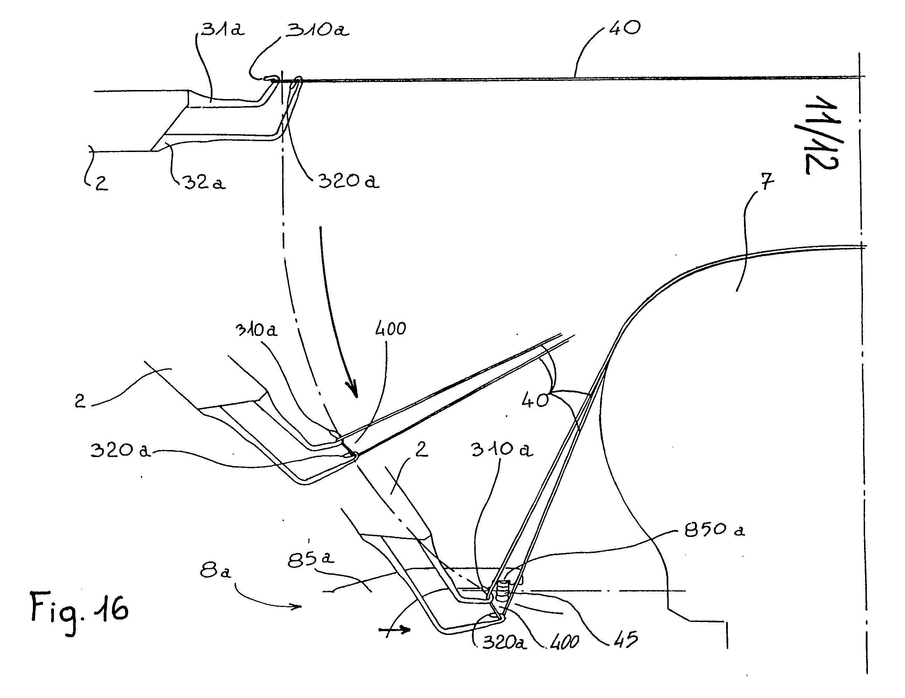

Le rabattement est semblable dans son principe général à ce qui est exposé ci-dessus. Les différences concernent essentiellement le décrochage des moyens de retenue 3 (voir figures 16 à 18). L'appareil comporte, de chaque côté du noyau, un dispositif 8a comportant essentiellement une pluralité de lames 85a mobiles aixalement simultanément et raidalement simultanément tout en restant parallèles à l'axe des couronnes 1. Ces lames 85a comportent un logement 850a orienté radialement vers l'intérieur. Ce logement 850a, inséré entre les tronçons 40 de fil 4 pour fermer un quadrilatère par ailleurs formé par le fil 4 ayant fomré les boucles 400, détermine le diamètre exterior de la tringle. Ces logements 850a guident donc l'insertion de la tringle. Lorsque celle-ci est enfilée et que les agrafes sont posées, on procède au dégagement du fil 4 hors des moyens de retenue 3 avec l'aide des lames 85a. La tringle 45 étant maintenue axialement par les logements 850a des lames 85a, on rapproche axialement les deux couronnes 1 l'une de l'ature. Les bras de support 2 avancement donc axialement vers le centre du noyau 7 ce qui, les fils 4 étant maintenus par la tringle 45 immobilisée par les lames 85a, assure le décrochage des crochets 31a et 32a dont les pointes 310a et 320a sont ici orientées dans le même sens. La poussée appliquée sur les points de commande 22 provoque de ce fait le basculement complet des bras de support 2. De préférence, on prévoit que, au même, les tronçons 40 de fil 4 sont plaqués contre le noyau 7 sous l'effet de ressorts 25. Ces ressorts 25 sont en forme de "U" dont les branches sensiblement parallèles et flexibles sont solidaires chacune d'un bras de support 2 et dont la branche de base 250 appuye constamment contre les tronçons 40 de fil 4. Grâce à ces ressorts 25, les tronçons 40 constituant l'armature de carcasse restent tendus après le décrochage des moyens de retenue 3. Les lames 85a sont ensuite soulevées, reculées axialement, puis abaissées axialement à l'extérieur de la tringle 45. La tringle 45 peut ensuite être avancée axialement à sa position finale contre le noyau 7. De préférence, on accompagne ce mouvement d'un rapprochement axial des couronnes 1 de bras de support 2, pour que la branche 250 des ressorts 25 puisse appliquer les tronçons 40 de fil 4 contre le noyau 7. A cette fin, les ressorts 25 sont attachés au bras de support 2 de manière telle que le mouvement axial des couronnes 1 vers le noyau 7 fasse descendre radialement les branches de base 250 tout en longeant le noyau 7.

Le procédé et l'appareil décrits permettent de réaliser des renforcements dont les fils 4 disposés dans les flancs sont radiaux ou non, et dont les fils 4 disposés sous la bande de roulement sont parallèles à l'axe ou non. On peut, le cas échéant, modifier le position angulaire des couronnes 1 l'une par rapport à l'autre avant et/ou pendant le rabattement pour obtenir l'architecture souhaitée pour le renforcement.

Le pneumatique obtenu par les moyens illustrant l'invention comporte une armature de carcasse sans retournement, par contraste avec la disposition universellement adoptée à l'heure actuelle dans l'industrie du pneumatique où l'armature de carcasse est retournée autour des tringles. Cependant, l'invention permet également de réaliser de tels retournements en adaptant l'écartement des moyens de retenue 3 et leur rabattement autour du noyau 7.

**Revendications**

1. Porcédé de fabrication d'un renforcement pour pneumatique, comprenant les étapes suivantes:

a) un fil (4) continu est accroché à des moyens de retenue (3) disposés en deux cercles séparés d'une distance correspondant à la longueur du trajet d'un fil d'un côté à l'autre du renforcement de sortie que le fil (4) ainsi disposé définit un cylindre par une pluralité d'allers et retours d'un moyen de retenue à un autre,

b) par un mouvement approprié des moyens de retenue (3), le fil (4) ainsi disposé est rabattu sur et autour d'un noyau rigide (7) définissant la forme de la surface intérieure du pneumatique,

c) l'ancrage du fil (4) étant assuré, les moyens de retenue (3) sont dégagés.

2. Procédé de fabrication d'un pneumatique comprenant les étapes suivants:

a) d'une part, une ou plusieurs couche(s) de caoutchouc est(sont) appliquée(s) sur un noyau rigide (7) définissant la forme de la surface intérieure du pneumatique, et d'autre part un fil (4) continu est accroché à des moyens de retenue (3) disposés en deux cercles séparés d'une distance correspondant à la longueur du trajet d'un fil d'un côté à l'autre du renforcement de sorte que le fil ainsi disposé définit un cylindre par une pluralité d'allers et de retours d'un moyen de retenue (3) à un autre,

b) ledit noyau rigide (7) est inséré à l'intérieur dudit cylindre,

c) par un mouvement approprié des moyens de retenue (3), le fil (4) ainsi disposé est rabattu sur et autour dudit noyau (7),

d) l'ancrage du fil (4) étant assuré, les moyens de retenue (3) sont dégagés,

e) la fabrication du pneumatique est poursuivie.

3. Procédé selon la revendication 2, caractérisé en ce que les moyens utilisés pour réaliser l'ancrage comportent une tringle (45).

4. Procédé selon la revendication 3, caractérisé en ce que l'ancrage du fil (4) comporte les étapes suivantes:

a) au cours du rabattement, chaque moyen de retenue (3) amorce la création d'une boucle (400) dans le fil (4) à l'endroit où ledit fil (4) repart vers un moyen de retenue (3) du côté axialement opposé,

b) certaines au moins des boucles (400) ainsi amorcées sont fermées à un niveau radialement extérieur aux moyens de retenue (3),

c) on insère plusieurs spires d'un profilé dans le boucles (400) ainsi créées,

d) on solidarise lesdites spires pour qu'elles constituent une tringle (45).

5. Appareil de fabrication de pneumatiques comportant au moins un renforcement constitué à partir d'un seul fil, comportant:

a) deux couronnes (1) de bras de support (2) dont l'extrémité (20) axialement intérieure

peut être déplacée axialement et radialement,

porte des moyens de retenue (3) dudit fil (4),

b) un bras rotatif (5)

dont l'axe de rotation est

sensiblement perpendiculaire à l'axe desdites couronnes (1),

situé axialement sensiblement à mi-distance entre lesdites moyens de retenue (3),

qui porte des moyens de dévidage permettant d'accrocher le fil (4) aux moyens de retenue (3) à chaque passage du bras rotatif (5), les deux couronnes (1) tournant d'un angle correspondant à l'écart entre deux moyens de retenue (3) adjacents, à chaque du bras rotatif (5),

(c) des moyens permettant d'insérer un noyau (7) radialement à l'interieur du cylindre formé par les moyens de retenue (3).

6. Appareil selon la revendication 5, caractérisé en ce que ledit bras rotatif (5) est situé radialement à l'extérieur du cylindre défini par des moyens de retenue (3) du fil (4).

7. Appareil selon l'une des revendications 5 ou 6, caractérisé en ce que le positionnement desdits bras de support (2) au passage du bras rotatif (5) est affermi par une cannelure (60) hélicoïdale engrenée sur les bras de support (2).

8. Appareil selon l'une des revendications 5 à 7, caractérisé en ce que les moyens de dévidage comportent essentiellement un orifice de sortie (52) du fil (4), situé à l'extrémité du bras rotatif (5), en arrière par rapport au sens de rotation.

9. Appareil selon la revendication 8, caractérisé en ce que ledit bras rotatif (5) comporte en outre, en arrière par rapport au sens de rotation,

entre l'extrémité et le centre, un ergot (53, 53a) soulevant le fil (4) à sa sortie de l'orifice (52),

au centre, un élément de maintien (54) de la tension du fil.

10. Appareil selon la revendication 9, caractérisé en ce que ledit ergot (53a) est soulevé par l'action d'un tige (530a) sollicitée par une came (531a).

11. Appareil selon l'une des revendications 5 à 10, caractérisé en ce que les moyens de retenue (3) du fil (4) sont constitués par deux crochets (31, 32 ou 31a, 32a), l'un assurant l'accrochage du fil présenté par le bras rotatif, l'autre amorçant la formation d'une boucle lors du rabattement.

12. Appareil selon la revendication 11, caractérisé en ce que les pointes (310, 320) desdits crochets sont orientés axialement dans sens opposés.

13. Appareil selon la revendication 11, caractérisé en ce que les pointes (310a, 320a) desdits crochets sont orientés axialement dans le même sens.

14. Appareil selon l'une des revendications 5 à 13, caractérisé en ce qu'il comporte deux dispositifs (8) utilisés lors de l'ancrage à une tringle (45), chaque dispositif comportant plusieurs ensembles (80) mobiles axialement simultanément, chaque ensemble (80) étant essentiellement constitué par

une tige droite (81) paralléle à l'axe de rotation du pneumatique, destinée à guider l'insertion de la tringle dans les boucles radialement à extérieur des moyens de retenue,

un doigt (82) basculant destiné à permettre le dégagément des fils hors des moyens de retenue.

15. Appareil selon l'une des revendications 5 à 13, caractérisé en ce qu'il comporte deux dispositifs (8) utilisés lors de l'ancrage à une tringle, chaque dispositif comportant plusieurs lames (85a) mobiles axialement simultanément et radialement simultanément, chaque lame comportant un logement (850a), lesdits logements guidant l'insertion de la tringle et permettant le dégagement du fil hors des moyens de retenue.

16. Appareil selon l'une des revendications 5 à 15, caractérisé en ce que les moyens permettant l'insertion d'un noyau sont essentiellement constitués par:

radialement à l'intérieur de l'une des couronnes de bras de support et pour au moins une position desdits bras de support, un espace (70) libre plus grand que l'encombrement du noyau, un système (71) d'avancée (extraction) du noyau vers (hors de) sa position entre les moyens de retenue.

17. Procédé de fabrication d'un pneumatique au moyen d'un appareil selon l'une des revendications 5 à 16, comportant les étapes suivantes:

a) l'extrémité libre du fil (4) étant maintenue au voisinage du moyen de retenue (3) que le bras rotatif (5) laisse derrière et au dessus de lui, ledit bras rotatif (5) réalise le renforcement en accrochant le fil (4) à tous les moyens de retenue (3) en effectuant autant de tours qu'il y a de moyens de retenue (3) du fil (4) sur une couronne (1), réalisant ainsi un cylindre formé d'autant de tronçons (40) de fil (4) qu'il y a de moyens de retenue (3) sur les deux couronnes (1),

b) le fil (4) est solidarisé au premier des tronçons (40') de fil (4) et est coupé,

c) un noyau rigide (7) est inséré à l'intérieur et au milieu du renforcement ainsi préparé,

d) Les moyens de retenue (3) sont rabattus autour du noyau (7) rigide tout en maintenant les fils (4) de renforcement tendus,

e) On ancre les fils (4) à une tringle (45) et on décroche les moyens de retenue (3).

18. Procédé de fabrication d'un pneumatique selon la revendication 17, au moyen d'un appareil selon la revendication 14, comportant les étapes suivantes:

Les moyens de retenue (3) sont rabattus autour du noyau rigide (7) tout en maintenant les fils (4) de renforcement tendus, ledit rabattement étant arrêté dès que les moyens de retenue (3) sont radialement à un niveau inférieur au diamètre de la tringle (45) à constituer, puis

On approche axialement les dispositifs (8) utilisés lors de l'ancrage à une tringle de sorte que chaque tige droite (81) parallèle à l'axe du pneumatique ferme un quadrilatère par ailleurs formé par le fil (4) de renforcement ayant formé une boucle (400) lors dudit rabattement des moyens de retenue (3),

on introduit plusieurs spires d'un profilé pour former une tringle (45),

on abaisse les doigts (82) axialement du côté intérieur de la tringle (45),

on avance axialement vers l'intérieur les bras de support (2) des crochets (31, 32), ce qui permet de décrocher les premiers crochets (31),

on soulève les doigts (82), on recule axialement les dispositifs (8) d'ancrage, on abaisse les doigts (82) axialement à l'extérieur de le tringle (45),

on avance axialement la tringle (45) à sa position finale contre le noyau (7),

on recule axialement les bras de support (2), ce qui permet de déchrocher les derniers crochets (32).

19. Procédé de fabrication d'un pneumatique selon la revendication 17, au moyen d'un appareil selon la revendication 15, comportant les étapes suivantes:

Les moyens de retenue (3) sont rabattus autour du noyau rigide (7) tout en maintenant les fils (4) de renforcement tendus, ledit rabattement étant arrêté dès que les moyens de retenue sont radialement à un niveau inférieur au diamètre de la tringle (45) à constituer, puis

On approche axialement les dispositifs (8a) utilisés lors de l'ancrage à une tringle de sorte que chaque logement (850a) ferme un quadrilatère par ailleurs formé par le fil (4) ayant formé une boucle (400) lors dudit rabattement des moyens de retenue (3),

on introduit plusiers spires d'un profilé pour former une tringle (45),

on avance axialement vers l'intérieur les bras de support (2) des crochets (31a, 32a), ce qui permet de décrocher tous les crochets (31a, 32a),

on soulève lesdites lames (85a), on les recule et on les abaisse axialement à l'extérieur de ladite tringle (45),

on avance axialement la tringle (45) à sa position finale contre le noyau (7).

20. Crochet (31, 32, 31a, 32a) pour un appareil de fabrication de pneumatiques, dans lequel la pointe (310, 320, 310a, 320a) du crochet est située en dehors du plan dans lequel est comprise la base dudit crochet.

**Patentansprüche**

1. Herstellungsverfahren für eine Luftreifenverstärkung, umfassend die folgenden Schritte:

a) ein durchgehender Faden (4) wird an Haltemitteln (3) befestigt, die in zwei Kreisen angeordnet sind, die voneinander einen Abstand aufweisen, der der Länge der Trajektorie eines Fadens von einer Seite der Verstärkung zur anderen entspricht, sodaß der aufgebrachte Faden (4) durch eine Vielzahl von hin- und hergehenden Abschnitten von einem Haltemittel (3) zum anderen einen Zylinder definiert,

b) der Faden (4) wird durch eine passende Bewegung der Haltemittel (3) auf und um einen steifen Kern (7) geschlagen, der die Form der inneren Oberfläche des Luftreifens definiert,

c) wenn die Varankerung des Fadens (4) gesichert ist, werden die Haltemittel (3) gelöst.

2. Herstellungsverfahren für einen Luftreifen, umfassend die folgenden Schritte:

a) einerseits wird zumindest eine oder Schichte aus Kautschuk auf einen steifen Kern (7) aufgebracht, der die form der inneren Oberfläche des Luftreifens definiert, und anderseits wird ein durchgehender Faden (4) an Haltemitteln (3) befestigt, die in zwei Kreisen angeordnet sind, die voneinander einen Abstand aufweisen, der der Länge der Trajektorie eines Fadens von einer Seite der Verstärkung zur anderen entspricht, sodaß der aufgebrachte Faden durch eine Vielzahl von hin- und hergehenden Abschnitten von einem Haltemittel (3) zum anderen einen Zylinder definiert,

b) der genannte steife Kern (7) wird ins Innere dieses Zylinders eingebracht,

c) durch eine passende Bewegung der Haltemittel (3) wird der aufgebrachte Faden (4) auf und um den Kern (7) geschlagen,

d) wenn die Verankerung des Fadens (4) gesichert ist, werden die Haltemittel (3) gelöst,

e) es wird mit der Herstellung des Luftreifens fortgefahren.

3. Verfahren nach Anspruch 2, dadurch gekennzeichnet, daß die zur Verankerung verwendeten Mittel einen Wulstkern (35) umfassen.

4. Verfahren nach Anspruch 3, dadurch gekennzeichnet, daß die Verankerung des Fadens (4) die folgenden Schritte umfaßt:

a) während des Umschlagens bewirkt jedes Haltemittel (3) die Bildung einer Schlinge (400) im Faden (4) an der Stelle, an der der Faden (4) zu einem Haltemittel (3) der axial gegenüberliegenden Seite umkehrt,

b) zuimindest einige der so gebildeten Schlingen (400) werden in einem Bereich radial außerhalb der Haltemittel (3) geschlossen,

c) man bringt einige Windungen eines Profils in die so gebildeten Schlingen (400) ein,

d) man verbindet diese Windungen, damit sie einen Wulstkern (45) bilden.

5. Vorrichtung zur Herstellung eines Luftreifens, der zumindest eine Verstärkung umfaßt, die ausgehend von einem einzigen Faden hergestellt worden ist, umfassend:

a) zwei Kränze (1) von Stützarmen (2), deren axial innere Enden (20)

axial und radial verschoben werden können,

Haltemittel (3) für den Faden (4) tragen,

b) eine Dreharm (5)

dessen Drehachse

im wesentlichen rechtwinkelig auf die Achse der Kränze (1) steht,

aixal im wesentlichen in der Mitte zwischen den Haltemitteln (3) liegt,

der Abspulmittel aufweist, die es erlauben, den Faden (4) bei jedem Durchgang des Dreharmes (5) auf den Haltemitteln (3) zu verankern, wobei die beiden Kränze (1) bei jeder Umdrehung des Dreharmes (5) um einen Winkel verdreht werden, der dem Abstand zwischen zwei benachbarten Haltemitteln entspricht,

c) Mittel, die es erlauben, einen Kern (7) radial ins Innere des von den Haltemitteln (3) gebildeten Zylinders einzubringen.

6. Vorrichtung nach Aspruch 5, dadurch gekennzeichnet, daß der Dreharm (5) radial außberhalb des durch die Haltemittel (3) für den Faden (4) definierten Zylinders angeordnet ist.

7. Vorrichtung nach einem der Ansprüche 5 oder 6, dadurch gekennzeichnet, daß die Lage der Stützarme (2) beim Durchgang des Dreharmes (5) durch eine schneckenförmige Kannelierung (60) gesichert wird, die in die Stützarme (2) eingreift.

8. Vorrichtung nach einem der Ansprüche 5 bis 7, dadurch gekennzeichnet, daß die Abspulmittel im wesentlichen eine Ausgangsöffnung (52) für den Faden (4) umfassen, die am Ende des Dreharmes (5) und bezüglich seiner Drehrichtung auf seiner Rückseite angeordnet ist.

9. Vorrichtung nach Aspruch 8, dadurch gekennzeichnet, daß der Dreharm (5) darüberhinaus an seiner Rückseite bezüglich der Drehrichtung,

zwischen dem Ende und dem Zentrum einen Heber (53, 53a) aufweist, der den Faden (4) beim Verlassen der Öffnung (52) untergreift und

im Zentrum ein Element (54) zur Aufrechterhaltung der Spannung des Fadens aufweist.

10. Vorrichtung nach Aspruch 9, dadurch gekennzeichnet, daß der Heber (53a) mittels einer Stange (530a) gehoben wird, die mit einer Nocke (531a) verbunden ist.

11. Vorrichtung nach einem der Ansprüche 5 bis 10, dadurch gekennzeichnet, daß die Haltemittel (3) für den Faden (4) aus zwei Haken (31, 32 oder 31a, 32a) bestehen, von denen der eine die Verankerung des vom Dreharm gebrachten Fadens sichert, während der andere die Bildung einer Schlinge während des Umschlingens ermöglicht.

12. Vorrichtung nach Aspruch 11, dadurch gekennzeichnet, daß die Spitzen (310, 320) der Haken in axialer Richtung in entgegengesetzer Richtung zeigen.

13. Vorrichtung nach Aspruch 11, dadurch gekennzeichnet, daß die Spitzen (310a, 320a) der Haken axial in die gleiche Richtung zeigen.

14. Vorrichtung nach einem der Ansprüche 5 bis 13, dadurch gekennzeichnet, daß sie zwei Vorrichtungen (8) aufweist, die während des Verankerns eines Wulstkernes (45) verwendet werden, wobei jede Vorrichtung mehrere Ensembles (80) aufweist, die in axialer Richtung simultan beweglich sind, wobei jedes Ensembles (80) im wesentlichen aus

einer geraden Stange (81) besteht, die parallel zur Rotationaschse des Luftreifens verläuft und dazu bestimmt ist, das Einbringen des Wulstkern in die Schlingen raidal außerhalb der Haltemittel zu erlauben und

einem kippbaren Finger (82), der dazu bestimmt ist, das Lösen der Fäden von den Haltemitteln zu erlauben.

15. Vorrichtung nach einem der Ansprüche 5 bis 13, dadurch gekennzeichnet, daß sie zwei Vorrichtungen (8) aufweist, die während des Verankerns auf einem Wulstkern verwendet werden, wobei jede Vorrichtung mehrere dünne Plättchen (85a) aufweist, die axial und radial simultan beweglich sind, wobei jedes Plättchen einen Sitz (850a) aufweist, der das Einbringen des Wulstkernes ermöglicht und das Lösen des Fadens von den Haltemitteln erlaubt.

16. Vorrichtung nach einem der Ansprüche 5 bis 15, dadurch gekennzeichnet, daß die Mittel, die das Einbringen des Kernes erlauben, im wesentlichen bestehen aus:

einem freien Raum (70), der größer ist als der Platzbedarf des Kernes und der radial innerhalb eines der Kränze der Stützarme und zumindest in einer Lage der Stützarme besteht,

einem Einbringungs-(Ausbringungs)system (71) für den Kern in die (aus der) Lage zwischen den Haltemitteln.

17. Herstellungsverfahren für einen Luftreifen mittels einer Vorrichtung nach einem der Ansprüche 5 bis 16, umfassend die folgenden Schritte:

a) das freie Ende des Fadens (4) wird einem Haltemittel (3) benachbart, das der Rotationsarm (5) hinter und ober sich läßt, gehalten, der Dreharm (5) baut die Verstärkung auf, indem er den Faden (4) an allen Haltemitteln (3) befestigt, wobei er soviele Umdrehungen ausführt, als es Haltemittel (3) für den Faden (4) auf einem Kranz (1) gibt, wodurch ein Zylinder gebildet wird, der von den Abschnitten (40) des Fadens (4), die auf den Haltemitteln (3) der beiden Kränze (1) gehalten sind, definiert wird,

b) der Faden (4) wird, nachdem er mit dem ersten Abschnitt (40') des Fadens (4) verbunden wird, geschnitten,

c) ein steifer Kern (7) wird ins Innere und die Mitte der so vorbereiteten Verstärkung eingebracht,

d) die Haltemittel (3) werden um den steifen Kern (7) geschlagen, wobei die Fäden (4) der Verstärkung gespannt bleiben,

e) man verankert die Fäden (4) an einem Wulstkern (45) und löst die Haltemittel (3).

18. Herstellungsverfahren für einen Luftreifen nach Anspruch 17 unter Verwendung einer Vorrichtung nach Anspruch 14, umfassend die folgenden Schirtte:

die Haltemittel (3) werden um den steifen Kern (7) geschlagen, wobei die Fäden (4) der Verstärkung gespannt bleiben, das Umschlagen wird gestoppt, wenn die Haltemittel (3) radial in einem Bereich sind, der kleiner als der Durchmesser des zu bildenden Wulstkerenes (45) ist, sodann werden die Vorrichtungen (8) die während der Verankerung an einem Wulstkern verwendet werden, axial genähert, wobei jede gerade Stange (81) parallel zur Luftreifenachse verläuft und ein vom Verstärkungsfaden (4), der eine Schlinge (400) während des Umschlagens der Haltemittel (3) bildet, gebildetes angenähertes Viereck schließt,

man bringt mehrere Windungen eines Profiles ein, um einen Wulstkern (45) zu bilden,

man senkt die Finger (82) auf der axial inneren Seite des Wulstkernes (45),

man schiebt die Stützarme (2) der Haken (31, 32) nach innen, was es erlaubt, die ersten Haken (31) zu lösen,

man hebt die Finger (82), zieht die Verankerungsvorrichtungen (8) axial zurück, senkt die Finger (82) axial außerhalb des Wulstkernes (45),

man drückt den Wulstkern (45) axial in seine Endlage gegen den Kern (7),

man zieht die Stützarme (2) axial zurück, was es erlaubt, die letzten Haken (32) zu lösen.

19. Herstellungsverfahren für einen Luftreifen nach Anspruch 17 unter Verwendung einer Vorrichtung nach Anspruch 15, umfassend die folgenden Schritte:

die Haltemittel (3) werden um einen steifen Kern (7) geschlagen, wobei die Verstärkungsfäden (4) gespannt bleiben, das Umschlagen wird gestoppt, wenn die Haltemittel radial in einem Bereich sind, der kleiner ist als der Durchmesser des zu bilden Wulstkernes (45), sodann nähert man in axialer Richtung die Vorrichtungen (8a), die während des Verankerns an einem Wulstkern (45) verwendet werden, so, daß jeder Sitz (850a) ein Viereck schließt, das annähernd vom Faden (4) gebildet wird, der während des Umschlagens der Haltemittel (3) eine Schlinge (400) bildet,

man bringt mehrere Windungen eines Profiles ein, um einen Wulstkern (45) zu bilden,

man schiebt die Stützarme (2) der Haken (31a, 32a) axial nach innen vor, was es erlaubt, alle Haken (31a, 32a) zu lösen,

man hebt die genannten Plättchen (85a), zieht sie zurück und senkt sie axial außerhalb des Wulstkernes (45),

man drückt den Wulstkern (45) in axialer Richtung in seine Endlage gegen den Kern (7).

20. Haken (31, 32, 31a, 32a) für eine Vorrichtung zur Herstellung von Luftreifen, bei dem die Spitze (310, 320, 310a, 320a) des Hakens außberhalb der Ebene angeordnet ist, in der sich die Basis des genannten Hakens befindet.

**Claims**

1. A method of manufacturing a tire reinforcement formed from a continuou cord, comprising the following stages:

a) the continuous cord (4) is hooked to retention means (3) disposed in two circles which are a distance apart corresponding to the length of the path of the cord from one side of the reinforcement to the other so that the cord (4) disposed in this way defines a cylinder by a plurality of passes back and forth from one retention means (3) to another,

b) by a suitable movement of the retention means (3), the cord (4) which is disposed in this way is folded back on and around a rigid core (7) which defines the shape of the inner surface of the tire,

c) anchoring of the cord (4) being assured, the retention means (3) are released.

2. A method of manufacturing a tire comprising the following stages:

a) one or more layers of rubber are applied on a rigid core (7) which defines the shape of the inner surface of the tire and the continuous cord (4) is hooked to retention means (3) disposed in two circles which are at a distance apart corresponding to the length of the path of the cord from one side of the reinforcement to the other so that the cord disposed in this way defines a cylinder by a plurality of passes back and forth from one retention means to another,

b) the rigid core (7) is inserted within the cylinder,

c) by a suitable movement of the retention means (3), the cord (4) which is disposed in this way is folded back on and around the rigid core (7),

d) anchoring of the cord (4) being assured, the retention means (3) are released,

e) manufacture of the tire is continued.

3. A method according to claim 2, characterized by the fact that the means used to produce the anchoring comprise a bead ring (45).

4. A method according to claim 3, characterized by the fact that the anchoring of the cord (4) entails the following steps:

a) during the folding, each rentention means (3) starts the creation of a loop (400) in the cord (4) at the place where the cord (4) leaves towards a retention means (3) on the axially opposite side,

b) at least some of the loops (400) thus started are closed at a level radially outside the retention means (3),

c) several turns of a profiled means are inserted in the loops (400) thus created,

d) the turns are held together so that they constitute a bead ring (45).

5. An apparatus for the manufacture of a tire having at least one reinforcement formed from a continuous cord, comprising

a) two rings (1) of support arms (2) the axially inner end (20) of which

can be displaced axially and radially

bears retention means (3) for the cord (4)

b) a rotary arm (5)

whose axis of rotation is

sustantially perpendicular to the axis of the rings (1)

located substantiallay axially midway between the retention means (3),

which bears delivery means making it possible to hook the cord (4) to the retention means (3) upon each passage of the rotary arm (5), the two rings (1) turning through an angle corresponding to the distance between two adjacent retention means (3), upon each turn of the rotary arm (5);

c) means for permitting insertion of a rigid core (7) radially within a cylinder formed by the retention means (3).

6. An apparatus according to claim 5, characterized by the fact that the rotary arm (5) is located radially to the outside of the cylinder defined by the cord (4) retention means (3).

7. An apparatus according to claim 5 or 6, characterized by the fact that the positioning of the support arms (2) upon the passage of the rotary arm (5) is established by a helicoidal groove (60) meshing on the support arm (2).

8. An apparatus according to one of the claims 5 to 7, characterized by the fact that the delivery means comprise essentially an outlet orifice (52) for the cord (4), located at the end of the rotary arm (5), towards the rear with respect to the direction or rotation.

9. An apparatus according to claim 8, characterized by the fact that the rotary arm (5) further comprises, to the rear with respect to the direction of rotation,

between the end and the center, a spur (53, 53a) which lifts the cord upon its emergence from the orifice (52),

at the center, a member (54) for maintaining tension of the cord.

10. An apparatus according to claim 9, characterized by the fact that the spur (53a) is lifted by the action of a rod (530a) urged by a cam (531a).

11. An apparatus according to one of the claims 5 to 10, characterized by the fact that the retention means (3) for the cord (4) are formed by two hooks (31, 32, or 31a, 32a), one hook assuring the hooking of the cord presented by the rotary arm and the other hook starting from the formation of a loop upon folding.

12. An apparatus according to claim 11, characterized by the fact that points (310, 320) of the hooks are oriented axially in opposite directions.

13. An apparatus according to claim 11, characterized by the fact that points (310a, 320a) of the hooks are oriented axially in the samd direction.

14. An apparatus according to one of the claims 5 to 13, characterized by the fact that the apparatus further comprises two devices (8) used upon anchoring to a bead ring (45), each device comprising a plurality of assemblies (80) which are movable axially simultaneously, each assembly being formed essentially by:

a straight rod (81) parallel to the axis of rotation of the tire for guiding insertion of the bead ring in loops of the cord radially to the outside of the rentention means,

a swinging finger (82) for permitting release of the cords from the retention means.

15. An apparatus according to one of the claims 5 to 13, characterized by the fact that the apparatus further comprises two devices (8) used upon anchoring the cord to a bead ring, each device comprising a plurality of blades (85a) which are movable axially simultaneously and radially simultaneously, each blade having a groove (850a) for guiding insertion of the bead ring and for permitting release of the cord from the retention means.

16. An apparatus according to one of the claims 5 to 15, characterized by the fact that the means for permitting insertion of a rigid core are formed essentially by

radially to the interior of one of the rings of support arms and in the case of at least one position of the support arms, a free space (70) larger than the size of the core,

a system (71) for advance (retraction) of the core towards (and out of) its position between the retention means.

17. A method of manufacturing a tire by means of an apparatus according to one of the claims 5 to 16, comprising the following stages:

a) the free end of the cord (4) being maintained in the vicinity of the retention means (3) which the rotary arm (5) leaves behind and above it, the rotary arm (5) produces the reinforcement by hooking the cord (4) to all the retention means (3) by effecting as many turns as there are cords (4) retention means (3) on a ring (1), thus producing a cylinder formed of as many lengths (40) of cord (4) as there are retention means (3) on the two rings (1),

b) the cord (4) is made integral with the first of the lengths (40') of cord (4) and is cut,

c) a rigid core (7) is inserted within and in the middle of the reinforcement thus prepared,

d) the retention means (3) are folded around the rigid core (7) while maintaining the reinforcement cords (4) taut,

e) the cords (4) are anchored to a bead ring (45) and the rention means (3) are unhooked.

18. A method of manufacturing a tire according to claim 17, by means of an apparatus according to claim 14, comprising the following stages:

the retention means (3) are folded around the rigid core (7) while maintaining the reinforcement cords (4) taut, the folding being stopped as soon as the retention means (3) are radially at a level below the diameter of a bead ring (45), after that, the devices (8) used upon anchoring the cord to the bead ring are brought axially towards the bead ring so that each straight rod (81) parallel to the axis of rotation of the tire closes a quadrilateral which is otherwise formed by the reinforcement cord (4) which has formed a loop (400) upon the folding of the retention means (3),

several turns of a profiled member are introduced in order to form the bead ring (45);

the swinging fingers (82) are lowered axially on the inner side of the bead ring (45);

the support arms (2) of the hooks (31, 32) are advanced axially towards the interior, which makes it possible to release the first hooks (31);

the fingers (82) are raised, the anchoring devices (8) are moved back axially, the fingers (82) are lowered axially on the outside of the bead ring (45);

the bead ring (45) is advanced axially to its final position against the rigid core (7);

the support arms (2) are moved back axially, which makes it possible to unhook the last hooks (32).

19. A method of manufacturing a tire according to claim 17, by means of an apparatus according to claim 15, comprising the following stages:

the retention means (3) are folded around the rigid core (7) while maintaining the reinforcement cords (4) taut, the folding being stopped as soon as the retention means are radially at a level below the diameter of a bead ring (45), thereafter, the devices (8a) used upon anchoring the cord to the bead ring (45) are brought axially towards the bead ring so that each groove (850a) closes a quadrilateral which is otherwise formed by the reinforcement cord (4) which has formed a loop (400) upon the following of the retention means (3),

several turns of a profiled member are introduced in order to form the bead ring (45),

the support arms (2) of the hooks (31a, 32a) are advanced axially towards the interior, which makes it possible to release all the hooks (31a, 32a),

the blades (85a) are lifted, moved back and lowered axially to the outside of the bead ring (45),

the bead ring (45) is advanced axially to its final position against the rigid core (7).

20. Hook (31, 32, 31a, 32a) to be used in an apparatus for the manufacture of a tire whose point (310, 320, 310a, 320a) is located outside the plane comprising the base of said hook.

13

Fig. 1

1

Fig. 2

EP 0 243 851 B1

Fig. 3

EP 0 243 851 B1

EP 0 243 851 B1

Fig. 4

Fig. 5

Fig. 6

4

**Fig. 7**

**Fig. 8**

5

Fig. 9

Fig. 10

Fig. 11

EP 0 243 851 B1

Fig. 12

Fig. 12a

Fig. 14

Fig. 13

Fig. 15

Fig. 16

EP 0 243 851 B1

Fig. 18

Fig. 17